# EUROPEAN PATENT APPLICATION

(11) **EP 2 293 231 A1**
(43) Date of publication of application: **09.03.2011**
(21) Application number: 10275088.2
(22) Date of filing: 02.09.2010
(51) Int. Cl.: G06Q 30/00

(54) **Advertising system and method**

(30) Priority: 03.09.2009 GB 0915347; 07.10.2009 GB 0917543
(71) Applicant: Vodafone Group PLC, Newbury Berkshire RG14 2FN (GB)
(72) Inventor: Eskenazi, Cecile, Newbury, Berkshire RG14 2FN (GB); Bagguley, Andrew, Newbury, Berkshire RG14 2FN (GB); Kelly, Jonathan, Newbury, Berkshire RG14 2FN (GB); Radcliffe, Nick, Newbury, Berkshire RG14 2FN (GB)
(74) Representative: Sneary, Adrian Bernard

(57) **Abstract**

In a communications network, including at least one terminal and at least two content sources each configured to provide a different type of media content to the at least one terminal, a method of arbitrating between the at least two content sources for the provision of media content to the at least one terminal, the method including: determining one or more arbitration rules; using the one or more arbitration rules for selecting one of the content sources to provide the media content, such that the selection is dependent upon a characteristic of the content source; and displaying the selected media content in a predefined display region on a display of the terminal. Preferably the at least two content sources include an advertising database and a retail marketing database, and the arbitration rules arbitrate between the two based upon a percentage allocation.

## Description

### Field of the Invention

The present invention relates to a system and method for managing electronic/digital advertisements and promotions. More particularly the present invention relates to a system and method for managing the serving of advertisements to terminals in a communications network. Even more particularly the present invention relates to a system and method for managing advertising slots on both fixed-line internet and for mobile terminals in a mobile telecommunications network.

### Background

Online advertising is a well known system of electronic commerce. Online web-pages (hereinafter referred to as "pages") incorporating an advertising system typically include one or more designated advertising regions on the page, often referred to as "banners" or slots" in which graphics are presented displaying advertisements.

Advertisements are typically targeted, i.e. dynamically selected for inclusion in a slot after taking into consideration factors such as the page content, time of day, and user preferences, where information regarding the viewer of the page is known.

Normally in an online environment, where advertisements are directed to users via computer screens, the webpage presented typically has numerous spaces where advertisements and the like are presented from potentially different systems. This therefore allows multiple different advertisements to be directed towards the user.

Web pages are now being presented to users on mobile terminals and a mobile advertising industry has accordingly developed. Mobile advertising is focussed on the advertiser as the key client (and revenue source) with mobile subscribers as assets to be "sold" to advertisers. One way to effect this is to deliver agreed volumes of subscribers to each of a small number of advertisers. Ideally the subscribers are roughly segmented in order to suit the advertiser's interests. The advertisers are then able to present advertisements to their designated subscribers.

Revenue for such advertising can be achieved in a number of different ways:
- Fixed revenue per exposure (e.g. Cost Per Milenia (CPM) Model, where a charge is made when an advertisement has been presented to 1000 subscribers);
- A charge where a "click through" is made to the advertiser's site (Cost Per Click (CPC) Model); and
- A charge where a purchase is made, particularly after a "click through" event (Cost Per Acquisition (CPA) Model).

The CPM Model is the most frequently used and marketers typically seek to drive up the impressions through finer-grained targeting, more accurate subscriber data, location awareness, understanding of customer interests and the like. "Impression" is an industry metric, and refers to a single appearance of an advertisement being presented to a user or each time an advertisement loads onto a user's screen. An alternative term that may be used is an "exposure".

A related, but distinct industry that has also developed is mobile digital retailing. This industry is focussed on the consumer as the key client (rather than the advertiser) and aims to optimise revenue by maximising sales and ensure the engagement of the consumer as well as offering value to the consumer. In this way it is quite different from mobile advertising which, as mentioned above, is focussed on the advertiser as the key client.

Mobile digital retailing has two main facets, that of recommending products/services to the consumer and that of promoting products/services. For instance, the recommending aspect typically operates by finding products related to those that the consumer has previously bought, viewed, expressed interest in or items that have been "consumed" within a community or similar profile group, etc. and delivers targeted recommendations to the user. For example, the recommendations could be presented to the user as a set of "best buys", "new releases" or "Top 10". Product promotion on the other hand delivers information on discounts and 2-for-1 type offers. The key metric of digital content to the consumer is sales and/or downloads.

The advertising and retail marketing industries have coexisted in the online computer environment in parallel without significant conflict, as there is plenty of banner space and slots available for each.

In the mobile advertising environment, however, the screens of mobile terminals are smaller in size, so space for advertising and digital retailing is more limited. These restrictions have led to an increase in conflict between the advertising and retail marketing industries, as, despite their different marketing emphasis, they utilise the same resources (e.g. the banners and slots). There is therefore a need to better manage the competing interests of mobile advertisers and mobile digital retailers.

From a practical viewpoint, since advertising and digital retailing are well established as separate industries, with distinct and experienced service providers, both are likely to be resistant to major change, and be unwilling to risk compromising their existing practices and strategies, in order to improve the coexistence situation.

There is therefore a need for a solution to manage the competing interests of advertisers and digital retailers which minimises the change in practice of the two industries.

### Summary of the Invention

According to a first aspect the present invention provides in a communications network, including at least one terminal and at least two content sources each configured to provide a different type of media content to the at least one terminal, a method of arbitrating between the at least two content sources for the provision of media content to the at least one terminal, the method including: determining one or more arbitration rules; using the one or more arbitration rules for selecting one of the content sources to provide the media content, such that the selection is dependent upon a characteristic of the content source; and displaying the selected media content in a predefined display region on a display of the terminal.

An important aspect of the present invention is that arbitration can be performed between multiple content sources each providing different types of content, for which traditional arbitration techniques cannot be used since it is not possible to directly compare the different types of content.

Preferably the characteristic of the content source that the selection is dependent upon is the type of content source. This may be dependant upon a percentage based allocation for the provision of the media content, the percentage based allocated determined relative to the type of content source. Alternatively, this may be dependant upon an estimated return on investment for the provision of the media content, the estimated return on investment determined relative to the type of content source.

It is preferable that the at least two content sources include at least one advertising content source and at least one retail marketing content source and the media content for which the selection is in regard to is advertising/marketing content.

The provision of media content to the terminal is preferably in relation to a slot on a page to be displayed on the screen of a mobile terminal. The page may have a plurality of slots, in which case the arbitration can be performed for each slot independently. The invention is particularly advantageous from mobile terminals due to the relatively small screen size as compared to traditional "desktop" computers or laptops. However, the invention is also applicable to any other apparatus which can use slot-based media content.

The media content is for inclusion in a slot on a page may be any of the following:
- an idle screen banner;
- a client application run on/by the terminal;
- a widget run on/by the terminal; and
- a displayed message directed to the terminal, including an Instant Message (IM), a Short Message Service (SMS) message and a Multimedia Message Service (MMS) message.

Preferably the one or more arbitration rules include a rule defining a predetermined period of time in which at least one other rule is to be applied, for example the at least one other rule may be a plurality of percentage based allocations, and each are applied in a particular predetermined period of time.

According to another aspect of the invention there is provided an arbitration engine for use in a communications network including at least one terminal and at least two content sources each configured to provide a different type of media content to the at least one terminal, the arbitration engine being configured to: retrieve one or more arbitration rules from a rules database; and use the one or more arbitration rules to select one of the content sources to provide the media content to the terminal, such that the selection is dependent upon a characteristic of the content source; and display the selected media content in a predefined display region on a display of the terminal..

Advantageously these aspects of the invention enable two or more existing industries to cooperate without requiring major alterations to their mode of operation. For instance, it enables both industries to continue operating in their existing manner, with their existing customer focus, without requiring either to adapt in order to incorporate the principles of the other industry.

Further, the arbitration allows the sharing of resources between mobile retail marketers and mobile advertisers to be managed, such as by the mobile network operating company. It further allows the operating company to manage resources sharing between third parties, such as retail marketers and advertisers.

### Brief Description of the Drawings

For a better understanding of the present invention a number of embodiments will now be described, by way of example, with reference to the accompanying drawings, in which:
Figure 1 is a diagrammatic drawing of key elements of a mobile telecommunications network for use in explaining the operation of such a network, as well as the embodiments of the present invention.
Figure 2 illustrates an example wireframe mobile terminal user interface; and
Figure 3 illustrates a schematic arrangement for implementing an embodiment of the invention.

### Detailed Description

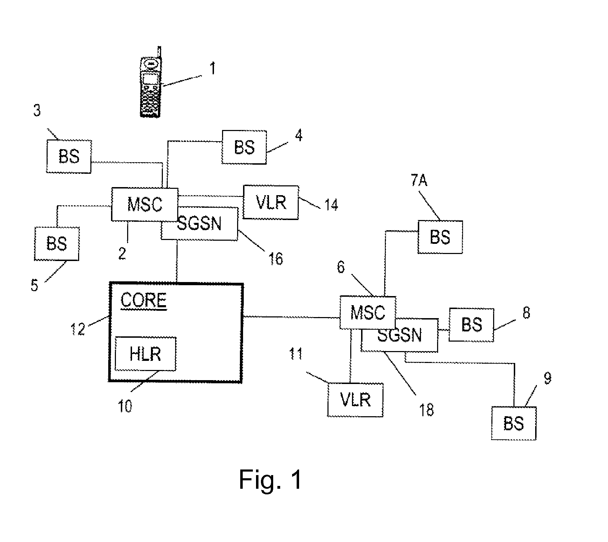

Key elements of a mobile telecommunications network, and its operation, will now briefly be described with reference to Figure 1. This is an example of a telecommunications network in which the embodiments of the invention may be implemented.

This network includes a number of base stations (3,4,5,7A,8,9). Each base station (BS) serves a respective cell of the cellular/mobile telecommunication network and receives calls/data from and transmits calls/data to a mobile device in that cell by wireless radio communication in one or both of the circuit switched or packet switched domains. Such a subscriber's mobile device (UE) is shown at 1. The mobile device may be any suitable portable device, including a handheld mobile telephone, a personal digital assistant (PDA) or a laptop computer equipped with a network connectivity datacard.

Conventionally, in a GSM/UMTS network, the base stations are arranged in groups and each group of base stations is controlled by one Serving GPRS Support Node (SGSN), such as SGSN 16 for base stations 3, 4 and 5. It is to be appreciated that the present invention is not limited to a GSM/UMTS network, and that this is just being described for illustrative purposes.

As shown in Figure 1, the network has another SGSN 18, which is controlling a further three base stations 7, 8 and 9. In practice, the network will incorporate many more SGSNs and base stations than shown in Figure 1.

The SGSNs 16 and 18 are provided to support communications in the packet switched domain - such as GPRS data transmissions. The SGSNs 16 and 18 are in turn connected to a gateway GPRS support node (GGSN - not shown), which provides a gateway to data networks, such as the Internet, in order to provide mobile broadband services.

Corresponding Mobile Switching Centres (MSCs) 2 and 6 support communications in the circuit switched domain - typically voice calls. The MSCs function in an analogous way to the SGSNs.

Each subscriber to the network is provided with a smart card or SIM which, when associated with the user's mobile terminal identifies the subscriber to the network. In this regard, the SIM card is pre-programmed with a unique identification number, the "International Mobile Subscriber Identity" (IMSI), for use by the network, but which is not generally known to the subscriber. The subscriber is issued with a publicly known number, that is, the subscriber's telephone number, by means of which callers initiate calls to the subscriber. This number is the MSISDN.

The network includes a home location register (HLR) 10 which, for each subscriber to the network, stores the IMSI and the corresponding MSISDN together with other subscriber data, such as information regarding the user's network tariff plan. The core network is configured to provide this subscriber information to certain other designated network elements upon request.

With this background in mind, a first embodiment of the invention will now be described. Modern mobile terminals (1) are essentially portable computing devices with the ability to not only make and receive voice calls across a mobile network, but also to interact with other users via SMS and MMS messages and additionally to easily gain access to the Internet. This easy access to the Internet has accordingly opened up advertising and promotional opportunities, as the user can readily access sites presented to them that are of interest. Whilst these advertising opportunities are most typically provided whilst a user is browsing the Internet using their mobile terminal, other channels are available for directing such content to a mobile terminal user including:
- idle screen banners;
- within client applications run on/by the terminal (e.g. gaming applications);
- embedded or native mobile device applications;
- within widgets run on/by the terminal (e.g. weather and stock market reporting widgets); and
- within messaging directed to the terminal, including Instant Messaging (IM), Short Message Service (SMS) and Multimedia Message Service (MMS) messages. The advertising content may be within pushed SMS/MMS messages or inserted into independently generated SMS/MMS messages.

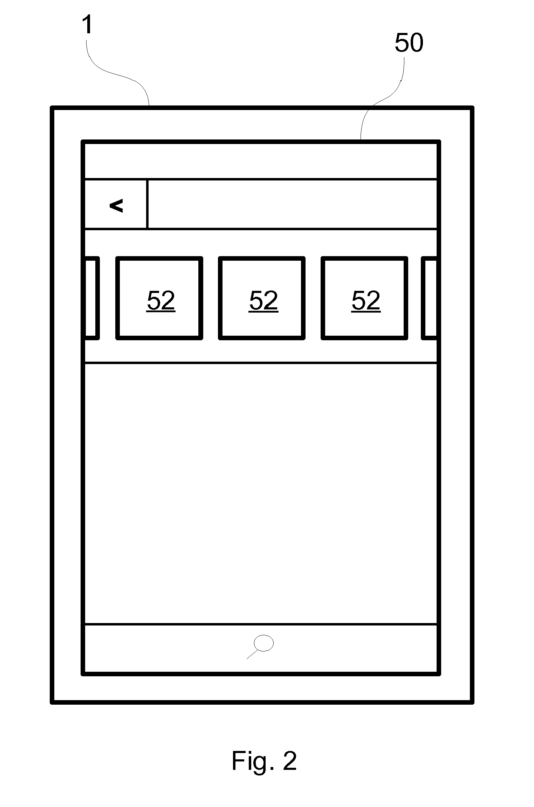

In this regard, Figure 2 illustrates an example of a shop front page that may be presented to a user on their mobile terminal's display 50. This shop front page may be a website, presented to the user as an idle screen by the network provider or be a navigatable screen available in the terminal's directories (e.g. alongside "Messages" and "Music Player" or a client application embedded or downloaded to the terminal device).

The display has a number of "slots" 52 which are display regions where media content such as one or more advertisements/promotions can be shown to the user in a graphical format. The slots 52 may be fixed locations in the layout displayed on the screen, or may be components of a scrolling banner. Scrolling banners rotate through a number of different slots on a screen layout and typically allow the user to navigate left or right through the slots in order to view different advertisements/promotions in the banner. Examples of a scrolling banner are the "Marquee" style, "Carousel" style and the "Coverflow", the latter most commonly known from Apple™ products. In the Figure 2 shop front example, a marquee-style scrolling banner is shown to provide a list of "Top 10 Apps" to the user, with three of a possible ten slots visible. The shop front illustration of figure 2 is just one example of how slots can be used to present advertising and marketing content to a mobile terminal user.

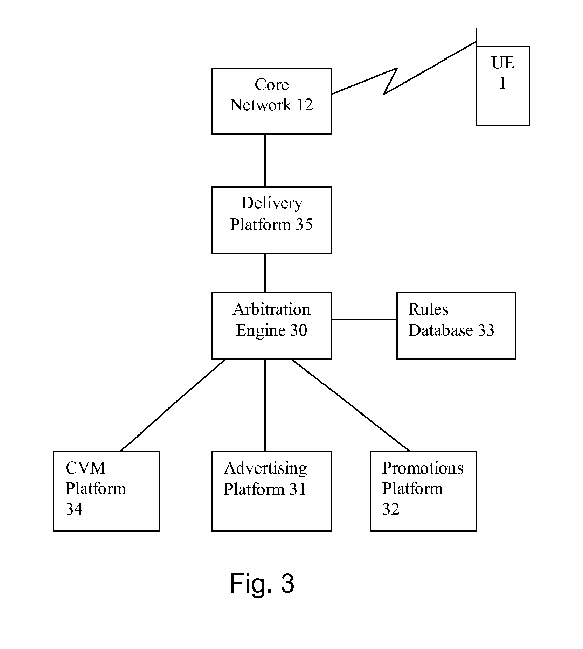

The filling of these slots with media content such as advertisements and the like is typically achieved dynamically. In view of the quite limited number of slots, according to this first embodiment of the invention, and with reference to Figure 3, an arbitration engine 30 is provided in order to determine the distribution of these slots between, in this embodiment, an advertising entity 31 and a retail marketing/promotions entity 32.

The arbitration engine 30 can be considered to arbitrate between the content types to be presented in a given slot. In this regard, content types are considered to differ by virtue of originating from different candidate systems, or content providers (e.g. an advertiser as opposed to a retail marketer) which provide different and not directly comparable types of content. In other words, in this embodiment, the arbitration engine arbitrates between content from an advertising source and content from a retail marketing source.

The arbitration engine 30 ideally only arbitrates on the basis of the content type/candidate system and not on the actual content provided. For example, the arbitration engine will determine whether content from the advertising source is to be served, or whether it is to be served from a retail marketing source. The engine ideally does not select the actual content from that source to be served (e.g. on a particular subject matter), as that selection is typically provided by another engine (e.g. delivery platform 35) at a higher level. For instance, this higher level engine could be an advertising platform or retailing platform used to more specifically target an advertisement/recommendation to a particular user based upon gathered user information, such as their interests, previous transaction history and/or current location. Of course, it is a possibility for the arbitration engine 30 to additionally provide this functionality.

The arbitration engine 30 is configured to select or arbitrate between two or more systems, which in this example is between an advertising platform 31 and a retailing recommendations/promotions platform 32. The arbitration can be for any number of available slots: for instance, it can be performed for just one predetermined slot or all the available slots, as required.

The arbitration engine 30 performs the arbitration based on a set of predefined rules 33. For each slot, these rules 33 define an appropriate mechanism for sharing the available slot between the eligible users of the slot (i.e. the sources of content for the slot). A percentage based allocation may be defined so that, for example, the advertising platform is allocated the slot 50% of the time and the promotions platform allocated the slot the other 50% of the time. In the case of multiple-slot pages, it is possible to define the percentage allocation on a per slots basis, so that each slot has in effect a different set of arbitration rules.

Preferably, in addition to defining the percentage allocation it is possible to define the time period the percentage allocation should take effect. For example, the percentage allocations may be variable depending upon the time of day, day of the week etc. As a specific example, a certain allocation (e.g. 50%/50%) may be defined to have effect from Monday to Friday between 9am and 5pm. An alternative allocation (e.g. 80% to advertising platform and 20% to promotions platform) may then have effect from Friday at 5.01pm until Monday at 8.59am. There is no limitation on the number of day and time periods that can be defined. Further, the rules may be defined for a limited period, for example, only from January 1 until March 1 and other percentage allocations can be implemented.

It is also to be appreciated that, where a percentage allocation is used to arbitrate between two or more candidate systems, a strict compliance with the percentages need not be applied. The percentage allocation is to be considered as a guide to the arbitration system as to which candidate system to allocate to the slot. For instance, the actual percentage allocation may be 38% to 62% where an allocation of 30% to 70% is designated in the arbitration engine. The arbitration engine will be maintaining a record of actual allocations and therefore allocate the next slot to the latter system in order to tilt the balance more towards the designated relative percentage. In the case that a candidate system does not provide a relevant advertisement, recommendation or promotion, then the arbitration engine may be configured to reallocate the slot to another candidate system.

Another alternative arbitration rule that may be applied is based on a return on investment (ROI). The candidate systems can be arranged to offer up a series of alternatives for display and the arbitration engine applies ROI or selection logic to these alternatives before choosing one and then informing the candidate systems of the decision.

In a second embodiment of the invention, a second level of arbitration is applied. This second level of arbitration is applied within the successfully arbitrated system. For example, where arbitration has been applied between the advertising platform 31 and the promotions platform 32, and say, the promotions platform is selected to fill the advertising slot, in this second embodiment of the invention further arbitration is then applied within the promotions platform. This second level of arbitration may be used to decide whether to select a promotion or a recommendation from within the promotions platform 32. Again, the arbitration may be performed on the basis of a predefined percentage allocation with promotion being allocated 70% and recommendations 30% of the slots allocated to the promotions platform 32.

As a further example of this second embodiment of the invention, where the advertising platform operates for a number of different candidate systems (e.g. a plurality of different advertising companies), then this second level of arbitration may also be used to determine which candidate system is to be allocated the slot once the advertising platform has been selected to provide the content over the other platforms vying for the slot.

In a third embodiment of the invention, in addition to arbitrating between a number of different candidate systems, one or more overriding provisions are incorporated into the arbitration engine 30. In this regard, in addition to content to from advertisers and retail marketers, the telecommunications provider may wish to present content related to the services they provide to the mobile terminal subscribers. This content is often described as "Customer Value Management" (CVM) content or "Customer Relationship Management" (CRM) content. Examples of this could be an offer of bonus minutes to the mobile terminal user. These offers may be subscriber-specific or to all of the telecommunications provider's customers. Alternatively, the content may be links to customer care information such as "My phone bill" and "How much does Mobile Internet cost?"

To implement this third embodiment of the invention, a "white list" could be utilised in order to ensure that the telecommunications provider only provided the CVM or CRM campaigns to their own high value subscribers (or a subset thereof) as a mechanic to prevent churning for example. That is, the subscribers that are to be capable of receiving the CVM content are put on a "white list", and preferably identified thereon via their MSISDN. Then when the arbitration engine 30 commences the arbitration process for a slot, and the subscriber for whom the slot applies to is found to be on the CVM white list, CVM content from the CVM platform 34 may be retrieved and presented to the subscriber. In other words, in this third embodiment of the invention, the CVM platform 34 overrides the other platforms for use of the slot, where the subscriber is on the white list.

The use of the white list in implementing this override provision allows the network provider to take control of the "advertising" slots for certain customers. However, this override provision would typically be limited to one predetermined slot on any given page in order to ensure that CVM content does not monopolise a page's slots or no duplication of offer occurs within any given interface with the customer.

Alternatively, rather than providing the CVM platform 34 with an automatic override over the other platforms, where a subscriber is found to be on the white list, the CVM platform 34 may be added to the platforms vying for the slot. For instance, the arbitration may be performed between the three platforms, the Advertising Platform 31, the Promotions Platform 32 and the CVM Platform 34 according to the applicable pre-defined rules (e.g. a percentage allocation with the CVM Platform at 60% and the other two platforms at 20% each).

In a similar manner, another platform that may be enabled with an override provision for accessing advertising slots is a "Local Campaign Manager" (LCM) platform. This override facility would be of particular use where the arbitration engine deals with multi-national entities who would like to make use of locally deployed systems to promote products and services with more locally-applicable advertisements/promotions.

The LCM override provision may be provided in addition to the CVM override provision for a given slot. In this situation, one override provision will need to have preference over the other.

In all of these embodiments of the invention, the possibility exists that once a particular platform has been selected to serve an advertisement on a mobile terminal, that the platform fails to do so, for whatever reason. As a preferred default position, if the selected candidate system does not produce the content to be served within a given period of time, then based on a set of "business rules" the arbitration process will select another candidate for display from the "candidate system systems" and serve this in the slot.

Further, in all of these embodiments of the invention, the output of the arbitration engine 30 is directed towards the mobile telecommunications network or internet session for provision to the user. Typically the output is served via a delivery platform 35. For example, if the arbitration engine has determined that a recommendation from the Promotions Platform is to be presented to the subscriber, the Delivery platform 35 will determine the actual recommendation to be presented, for instance, based upon knowledge of the subscriber's interests and/or purchase history. This server may be operated by the mobile service provider or a third party. The delivery platform 35 will then typically provide the content to the server responsible for presenting the information to the user. For example, where the advertisement/promotion content is then incorporated into an SMS sent to the user, the content will be directed towards the SMSC in the Core Network 12. Alternatively, where the content is to be incorporated into an application running on the mobile terminal, the content will be directed towards the application manager for inclusion on the user's display.

Figure 3 illustrates this delivery platform as being positioned between the arbitration engine and the core network, but this is not essential to the invention. The delivery platform 35 may instead be in communication with the core network via the arbitration engine, for instance.

The embodiments of the invention described so far are particularly advantageous as they allow the introduction of an arbitration engine into an existing system, and require no substantive adaptations to be made to the existing advertising and promotions platforms.

In a further alternative of the invention, the arbitration engine 30 arbitrates between the different platforms, such as the advertising platform 31 and the promotions platform 32, but only after each of those platforms has determined the particular advertisement/promotion from their range to present to the applicable subscriber. This embodiment of the invention can be considered to be similar to the embodiments described above, albeit with the functionality of the delivery platform 35 occurring before arbitration by the arbitration engine 30.

In effect, each platform determines the advertisement/promotion that it considers will result in its best "outcome" and then the arbitration engine 30 arbitrates between the best outcomes presented to it using its rules database 33. The rules applied are typically business rules and could again be a percentage allocation or could be based on the content of the best outcome (e.g. subject matter or ROI/revenue) for example to ensure an even spread of topics of interest to the user. This latter option would require the arbitration engine 30 to have some knowledge of the user's preferences and/or history.

In this embodiment, the arbitration engine would ideally provide feedback to the advertising and promotions platforms regarding the decisions that have been made. This would enable an unsuccessful platform to return their proposed advertisement/promotion to their database to enable reselection. It would also enable the platforms to keep track of the successful promotions/advertisements.

The embodiments of the invention described are to be taken as illustrative of the invention and not limitative.

For instance, whilst the present invention has been chiefly described in relation to advertising content slots on a static webpage displayed on a user's terminal screen, it may equally be utilised to arbitrate content type for other forms of advertising, including full screen interstitial pages and pre-roll/post-roll video advertisements (i.e. which stream before and after the main content respectively).

Further, whilst the present invention has been described in relation to arbitrating between visual advertisements, the embodiments of the invention may equally be applied to other forms of advertising served on a user, including aural advertisements which are played to the user via their mobile terminal speakers.

## Claims

1. In a communications network, including at least one terminal and at least two content sources each configured to provide a different type of media content to the at least one terminal, a method of arbitrating between the at least two content sources for the provision of media content to the at least one terminal, the method including:
determining one or more arbitration rules;
using the one or more arbitration rules for selecting one of the content sources to provide media content, such that the selection is dependent upon a characteristic of the content source; and
displaying the selected media content in a predefined display region on a display of the terminal.

2. The method of claim 1 wherein the characteristic of the content source that the selection is dependent upon is the type of content source.

3. The method of claim 2 wherein the characteristic of the content source that the selection is dependent upon is a percentage based allocation for the provision of the media content, the percentage based allocated determined relative to the type of content source.

4. The method of claim 2 wherein the characteristic of the content source that the selection is dependent upon is an estimated return on investment for the provision of the media content, the estimated return on investment determined relative to the type of content source.

5. The method of any one preceding claim wherein the at least two content sources include at least one advertising content source and at least one retail marketing content source and the media content for which the selection is in regard to is advertising/marketing content.

6. The method of claim 1 wherein the display comprises a plurality of display regions and the arbitration is performed for each display region independently.

7. The method of any one preceding claim wherein the one or more arbitration rules include a rule defining a predetermined period of time in which at least one other rule is to be applied.

8. The method of any one preceding claim wherein the one or more arbitration rules include a rule for selecting a predetermined content source to provide the media content if the terminal is listed in a list of terminals.

9. An arbitration engine for use in a communications network including at least one terminal and at least two content sources each configured to provide a different type of media content to the at least one terminal, the arbitration engine being configured to:
retrieve one or more arbitration rules from a rules database; and
use the one or more arbitration rules to select one of the content sources to provide the media content to the terminal, such that the selection is dependent upon a characteristic of the content source; and
display the selected media content in a predefined display region on a display of the terminal.

10. The arbitration engine of claim 9 wherein the characteristic of the content source that the arbitration engine is configured to base the selection upon is the type of content source.

11. The arbitration engine of claim 10 wherein the characteristic of the content source that the arbitration engine is configured to base the selection upon is a percentage based allocation for the provision of the media content, the percentage based allocated determined relative to the type of content source.

12. The arbitration engine of claim 10 wherein the characteristic of the content source that the arbitration engine is configured to base the selection upon is an estimated return on investment for the provision of the media content, the estimated return on investment determined relative to the type of content source.

13. The arbitration engine of claim 9 wherein the display comprises a plurality of display regions and the arbitration engine is configured to perform the arbitration for each display region independently.

14. The arbitration engine of any one of claims 9 to 13 wherein the one or more arbitration rules that the arbitration engine is configured to utilise include a rule defining a predetermined period of time in which at least one other rule is to be applied.

15. The arbitration engine of any one of claims 9 to 14 wherein the one or more arbitration rules that the arbitration engine is configured to utilise include a rule for selecting a predetermined content source to provide the media content if the terminal is listed in a list of terminals.
